# EUROPÄISCHE PATENTANMELDUNG

(11) **EP 1 726 220 A1**
(43) Veröffentlichungstag der Anmeldung: **29.11.2006**
(21) Anmeldenummer: 06010343.9
(22) Anmeldetag: 19.05.2006
(51) Int. Cl.: A23L 1/40, A23L 1/311

(54) **Altersklassengerechtes gefriergetrocknetes Lebensmittel und Verfahren zur Herstellung dieses Lebensmittels**

(30) Priorität: 27.05.2005 DE 102005024409
(71) Anmelder: VPF Lebensmittel GmbH & Co. KG, 31785 Hameln (DE)
(72) Erfinder: Eysel, Denis, 31785 Hameln (DE); Blümel, Petra, 31787 Hameln (DE)
(74) Vertreter: Junius, Walther

(57) **Zusammenfassung**

Die Erfindung betrifft ein altersklassengerechtes gefriergetrocknetes Lebensmittel und ein Verfahren zur Herstellung dieses Lebensmittels. Es ist die Aufgabe der Erfindung, ein Verfahren zur Herstellung von altersklassengerechter gefriergetrockneter Nahrung und die Nahrung an sich, bereitzustellen, bei dem für jede Altersklasse, insbesondere für iltere und kranke Menschen, ein gefriergetrocknetes Lebensmittel produziert wird, bei dem es keiner nachträglichen Dosierung eines Nahrungszusatzes bedarf. Zudem soll das Lebensmittel appetitanregend sein. Das erfindungsgemäße Verfahren zur Herstellung dieses Lebensmittels löst die Aufgabe dadurch, dass man als Basis ein oder mehrere zu Brei verarbeitungsfähige Grundnahrungsmittel verwendet, die einen erhöhten Trockenmasseantell aufweisen, dass man aus diesen Grundnahrungsmitteln einen Brei herstellt, dass man diesen Brei pasteurisiert, dass man dosiert Nahrungsmittelzusätze zusetzt, dass man diese Zusätze homogen im Brei verteilt und dass man anschließend den Brei mit den zugesetzten Zusatzstoffen gefriertrocknet und dass man die gefriergetrocknete Masse einem Zerteilungsprozess zu einem Pulver oder einem Granulat unterzieht, bevor man die feinzerteilte Trockenmasse abpackt und vor dem Verzehr mit Flüssigkeit wieder zu einem Brei anrührt. Das altersklassengerechte gefriergetrocknete Lebensmittel zeichnet sich dadurch aus, dass das Lebensmittel aus einem oder mehreren zu Brei verarbeiteten Grundnahrungsmitteln besteht, wobei das Grundnahrungsmittel einen erhöhten Trockenmasseanteil aufweist, dass diesem Brei dosiert Nahrungsmittelzusätze zugesetzt sind, dass dieser Zusatz im Brei homogen verteilt ist, so dass die gefriergetrocknete und zu Granulat zerkleinerte Nahrung durch Flüssigkeitszugabe zu einem Brei zur direkten Ausgabe ohne weitere Ergänzung bereitbar ist

## Beschreibung

Die Erfindung betrifft ein altersklassengerechtes gefriergetrocknetes Lebensmittel und ein Verfahren zur Herstellung dieses Lebensrnittels.

Es ist allgemein bekannt, dass Menschen unterschiedlicher Altersklassen und/oder Lebenslagen eine unterschiedliche Ernährungen benötigen. So verbraucht ein körperlich arbeitender Mensch mehr Kalorien als ein im Büro eine sitzende Tätigkeit ausübender Mensch. Ebenso benötigt ein älterer Mensch eine andere Speisenzusammensetzung als ein jüngerer Mensch.

Zwar können sich selbständig versorgende Personen ihre Ernährung auf diese Bedürfnisse einstellen, schwieriger aber gestaltet sich die Ernährung von älteren und/oder pflegebedürftigen Menschen, die sich ihr Essen nicht mehr selbst zubereiten können. Diese pflegebedürftigen Personen sind auf das in Großküchen zubereitete Essen angewiesen, welches durch einen Essen-Bringdienst direkt zu den Personen nach Hause ausgefahren wird oder in einer Pflege-/Krankeneinrichtung stationär gereicht wird. In Großküchen werden pro Tag Hunderte von Essen zubereitet, was zur Folge hat, dass die einzelne Portion nicht exakt auf die Bedürfnisse jeden einzelnen Bewohners bzw. Beziehers abgestimmt werden kann.

Aber gerade kranke oder ältere Menschen führen aus ernährungsphysiologischer Sicht unzureichend Nahrung zu: beispielsweise verbraucht ein an Demenz erkrankter Mensch in etwa doppelt so viele Kalorien wie ein nicht an Demenz erkrankter Mensch. Ältere oder erkrankte Menschen leiden oftmals an Appetitlosigkeit, zudem an Schluckproblemen und eingeschränkter Kaufähigkeit (Protesen etc.), so dass der tägliche Kalorienbedarf und die ernährungsphysiologisch notwendigen Nahrungskomponenten nicht über die angebotene Nahrung zugeführt werden können. Die Folge hieraus ist eine Mangelernährung durch eine zu geringe Energie- und/oder Vitaminund Mineralstoffaufnahme. Ebenso werden Gemüse und Obst und besonders Vollkornprodukte aufgrund der oben dargestellten Problematik zu wenig aufgenommen, so dass die Ballaststoffaufnahme ebenfalls zu gering ist.

Aufgrund des im Jahre 2000 eingeführten Pflegequalitätssicherungsgesetzes, welches die Überwachung und Dokumentation des Ernährungszustandes von Altenheim(pflege-)bewohnern vorschreibt, ergeben sich immer differenziertere Anforderungen an die Zusammensetzung der Ernährung. Diese Anforderungen werden in Altenheimen von Pflegekräften "auf Station" festgestellt und an die Küche weitergeleitet.

Daher ist es üblich, dass ein Koch einer solchen Großküche, bei der industriell vorgefertigte Nahrungsmittelprodukte aufbereitet werden, in die gesondert gekennzeichneten Essen einen Nahrungsergänzungsstoff zusetzt, der diesen Ernährungsmangel ausgleichen soll. Dieses Zusetzen erfordert jedoch von dem Küchenpersonal einen zusätzlichen Arbeitsschritt, der viel Zeit kostet und umständlich ist. Es kann zu Verwechslungen der Portionen kommen, oder in der Eile und Hektik im Betrieb einer Großküche werden die Zusatzmengen des Nahrungszusatzes nicht richtig dosiert. In der Küche muss der jeweilige Nahrungszusatz vorrätig sein, was die Organisation der Küche und das Raumangebot strapaziert. Daher ergibt es sich, dass ein Koch die Anforderungen an die Ernährung nicht zufriedenstellend erfüllen kann.
Speziell für ältere Menschen mit Kau- und Schluckproblemen muss separat sogenannte pürierte Kost zubereitet werden. Dies geschieht durch zerkleinern und pürleren von bereits gekochten Lebensmitteln. Konsistenz, Aussehen und Farbe dieser pürierten Kost ist nicht hilfreich, den Appetit anzuregen.

Die Erfindung vermeidet die Nachteile des Standes der Technik. Es ist die Aufgabe der Erfindung, ein Verfahren zur Herstellung von einem altersklassengerechten gefriergetrockneten Lebensmittel und das Lebensmittel an sich bereitzustellen, das für jeweilige Altersklassen ernährungsphysiologisch gerecht ist, so dass es insbesondere für ältere und kranke Menschen keiner nachträglichen Dosierung eines Nahrungszusatzes bedarf. Zudem soll das Lebensmittel appetitanregend sein.

Das ertndungsgemäße Verfahren zur Herstellung dieses Lebensmittels löst die Aufgabe dadurch, dass man als Basis ein oder mehrere zu Brei verarbeitungsfähige Grundnahrungsmittel verwendet, die einen erhöhten Trockenmasseanteil aufweisen, dass man aus diesen Grundnahrungsmitteln einen Brei herstellt, dass man diesen Brei pasteurisiert, dass man dosiert Nahrungsmittelzusätze zusetzt, dass man diese Zusätze homogen im Brei verteilt und dass man anschließend den Brei mit den zugesetzten Zusatzstoffen gefriertrocknet und dass man die gefriergetrocknete Masse einem Zerteilungsprozess zu einem Pulver oder einem Granulat unterzieht, bevor man die feinzerteilte Trockenmasse abpackt und vor dem Verzehr mit Flüssigkeit wieder zu einem Brei anrührt.

Somit ist ein Verfahren geschaffen, bei dem in einem der ersten Verfahrensschritte ernährungsphysiologisch wichtige Komponente(n) dem Nahrungsmittelbrei zugesetzt werden, bevor es mit samt dem Zusatz gefriergetrocknet und anschließend zu Granulat zerkleinert wird. Das in einer Küche aufzubereitende gefriergetrocknete Fertigprodukt bedarf keiner weiteren Ergänzung als der Zugabe von Flüssigkeit. Dieses spart Zeit und unterbindet Fehler in der Zubereitung.
Überraschenderweise und für den Fachmann unerwartet sind für die Zubereitung des gefriergetrockneten Lebensmittels nur diejenigen Anteile des zu Brei verarbeitungsfähigen Grundnehrungsmittels geeignet, die einen erhöhten, d.h. einen über dem Durchschnitt des Grundnahrungsmittels liegenden Trockenmasseanteil aufweisen.

Die Nahrungsmittelzusätze können jederzeit innerhalb des Verfahrensablaufes, jedoch vor der Gefriertrocknung zugesetzt werden. Die Zusätze sind je nach Zielgruppe des Lebensmittels altersklassengerecht in Menge und Zusatz zu wählen.

Vorteilhaft ist es, wenn man als zu Brei verarbeitungsfähiges Grundnahrungsmittel Gemüse, Obst oder Fleisch verwendet. Besonders Gemüse ist gut zu verarbeiten und ist als Grundnahrungsmittel einer gesundheitsbewussten Ernährung als Basis zugrunde zu legen. Es kann eine einzige Gemüseart verwendet werden, es können aber auch verschiedene Gemüse gemeinsam oder getrennt für ein einziges Lebensmittel verarbeitet werden. Als Gemüse können beispielsweise zerkleinerter Kohl, rote Beete, Rüben, Erbsen und/oder Karotten oder eine Mischung aus diesen verwendet werden. Bei der Auswahl ist jeweils dasjenige Gemüse einer Sorte zu verwenden, das einen über dem Durchschnitt dieses Gemüses liegenden Trockenmasseanteil aufweist. Gleiches gilt für das Grundnahrungsmittel Obst und Fleisch.

Zweckmäßig ist es, wenn man das zu Brei verarbeitungsfähige Grundnahrungsmittel gefriert, bevor man es zu einem Brei zerkleinert. Es hat sich herausgestellt, dass man durch vorheriges Gefrieren und abschließendem Gefriertrocknen innerhalb des Herstellungsverfahrens ein besonders schonend hergestelltes und hochqualitatives Endprodukt erhält. Zwar ist der Energieaufwand durch das Gefrieren erhöht, die ernährungsphysiologisch wichtigen Inhaltsstoffe des Grundnahrungsmittels und/oder der Zusätze sind hierdurch erhalten geblieben. Zudem ist das Granulatgefüge des Endproduktes besonders porös und Feuchtigkeitsdurchlässig, so dass eine Zubereitung mit Flüssigkeit besonders schnell zu einem sehr homogenen Brei ohne verbleibende Festbestandteile ermöglicht ist. Es können durch das besondere Herstellungsverfahren nun im Gegensatz zu bisher bekannten Verfahren auch kalte Flüssigkeiten zum Anrühren des aus dem Granulat zu fertigenden Breies verwendet werden. Diese Flüssigkeiten sind vorteilhafterweise Wasser, Milch, Sahne, Fruchtsaft oder Brühe oder Kombinationen dieser Flüssigkeiten.

Unterstützt wird diese Zubereitung des Breies dadurch, dass man die gefriergetrocknete Masse auf eine maximale Korngröße von 5 mm zerkleinert. Somit ist gegenüber dem Volumen eines Granulates eine große Oberfläche als Reaktionsfläche geschaffen worden, die das Zubereiten des Lebensmittets erleichtert.

Die gewünschte Breikonsistenz des mit Flüssigkeit zuzubereitenden Lebensmittels ist durch die Menge der Flüssigkeitszugabe zu wählen.

Zweckmäßig ist es für das Herstellungsverfahren, wenn man die Vermischung und Zerteilung mit einem Kutter vornimmt.

Vorteilhaft ist es, wenn man dem Brei dosiert Minerale und/oder Vitamine zusetzt, bevor man dann den homogen verarbeiteten Brei gefriertrocknet. Oftmals herrscht bei den älteren Menschen zum Katorienmangel zusätzlich ein Mangel an Mineralen, Vitaminen und/oder Spurenelementen. So können sämtliche Nahrungsergänzungsstoffe, die geeignet sind, einem Brei zugesetzt zu werden und die untereinander keine negativen Wechselwirkungen hervorrufen, erfindungsgemäß als Verfahrensschritt in den Brei eingebracht werden, bevor das Endprodukt hergestellt ist.

Je nach gewünschter Geschmacksrichtung können ebenfalls der Mischung vor oder nach dem Mischvorgang dosiert Kakao, Schokolade, Marmelade und/oder Trockenobst zugesetzt werden. Gleiches gilt für lebensmittelfärbende Zusätze, pflanzliches und/oder tierisches Eiweiß sowie für Appetit- und/oder geschmacksverstärkende Komponenten.

Mit zunehmendem Alter lassen Geschmacks- und Geruchserkennung nach. Damit die Speisen dennoch von älteren Menschen als appetitlich empfunden werden und gerne in ausreichender Menge gegessen werden, ist es für ein seniorengerechtes gefriergetrocknetes Lebensmittel von Vorteil, wenn man die geschmacksgebenden Komponenten als Zusätze überdosiert.

Als appetitanregend haben sich für ältere Menschen ebenfalls ungewöhnliche Kombinationen von Grundnahrungsmittelbrei mit einem Gewürz- oder einer Gewürzmischung als beispielsweiser Zusatz herausgestellt. Beispielsweise das Hinzugeben von Schinkenspeck- oder Eintropfgeschmackskomponenten in eine Erbsenbrei.

Besonders vorteilhaft ist es, wenn man als geschmacksgebende Komponente ein derartiges Aroma oder eine derartige geschmacksgebende Komponente hinzugibt, der aus den Kindertagen des Senioren bekannt ist. Dieses vermittelt dem Senioren positive Erinnerungen und steigert hierdurch das Wohlbefinden und den Appetit des Senioren.

Eigenschaften des seniorengerechten Nahrungsmittels, die im obigen Verfahrensabschnitt beschrieben sind, sind ergänzend zur der nachfolgenden Produktbeschreibung heranzuziehen.

Das altersklassengerechte gefriergetrocknete Lebensmittel zeichnet sich dadurch aus, dass das Lebensmittel aus einem oder mehreren zu Brei verarbeiteten Grundnahrungsmitteln besteht, wobei das Grundnahrungsmittel einen erhöhten Trockenmasseanteil aufweist, dass diesem Brei dosiert geschmacksgebende und/oder ernährungsphysiologisch sinnvolle (u./o. notwendige) Nahrungsmittelzusätze zugesetzt sind, dass dieser Zusatz im Brei homogen verteilt ist, so dass die gefriergetrocknete und zu Granulat zerkleinerte Nahrung durch Flüssigkeitszugabe zu einem Brei zur direkten Ausgabe ohne weitere Ergänzung bereitbar ist.

Somit ist ein in einer Großküche oder auch privat zur Pflege zu verwendendes Fertigprodukt als Nahrungsmittel zur Verfügung gestellt, das sofort nach Flüssigkeitszugabe ohne weitere Zugabe und Dosierung von ernährungsphysiologisch wichtigen Komponenten dem Patienten als Breispeise gereicht werden kann. Der Mangel an Nahrungsaufnahme und den altersklassen bedingten ernährungsphysiologisch wichtigen Komponenten kann durch sensorisch und in der Zusammensetzung geeignete Fertigkost ausgeglichen werden, ohne dass der Koch einer Großküche zusätzliche Arbeitsschritte durch nachträgliches Zugeben eines Zusatzes oder durch Pürieren hat. Der Arbeits- und Zeitaufwand in einer Großküche ist enorm verringert.

Zweckmäßig ist es, wenn das zu Brei verarbeitungsfähige Grundnahrungsmittel Gemüse, Obst oder Fleisch ist. Diese Grundnahrungsmittel sind für die Ernährung physiologisch wichtig und daher ist es angebracht, diese als Basis für das gefriergetrocknete Granulat zugrunde zu legen, Dem gefriergetrockneten Granulat können je Altersklassenbestimmung des Produktes alle diejenigen Nahrungszusätze zugesetzt sein, die sich ernährungsphysiologisch für die bestimmte Altersklasse als notwendig und wichtig erweisen. Dieses können beispielsweise Minerale und/oder Vitamine und/oder Spurenelemente und/oder hochkalorische Zusätze sein. Für jede Altersklassen ist somit durch altersklassengerechte Zusätze in geeigneter Dosierung jeglicher ernährungsbedingter Mangel ausgleichbar, ohne dass es ein aktives Zutun der Mitarbeiter einer Großküche oder einer Pflegeeinrichtung bedarf. Es ist lediglich das Fertigerzeugnis gefriergetrocknetes Granulat mit Flüssigkeit anzurühren.

Um den Appetit des Menschen zu steigern, so dass er das Lebensmittel in ausreichender Menge zu sich nimmt, ist es vorteilhaft, wenn der Brei dosiert Appetit- und/oder geschmacksverstärkende Komponenten oder lebensmittelfärbende Zusätze oder tierisches oder pflanzliches Eiweiß als Zusätze enthält.

Das Lebensmittel kann ebenfalls aus zwei oder mehreren unterschiedlichen gefriergetrockneten zu Brei anzurührenden Granulaten bestehen.

Der Appetit und die Esslust von älteren Menschen kann dadurch gesteigert werden, wenn für ein seniorengerechtes Lebensmittel die geschmacksgebenden Komponenten als Zusätze überdosiert zugesetzt sind. Denn mit zunehmendem Alter lassen Geschmacks- und Geruchserkennung nach. Speisen werden als fade, zu wenig gewürzt und als aromaarm empfunden. Durch eine unübliche Überdosierung an geschmacksgebenden Komponenten ist die nachlassende Geschmacks- und Geruchserkennung überwunden. Das Lebensmittel erscheint für den älteren Menschen nun wieder schmackhaft, so dass dieser seine Speise gerne und in notwendiger Menge isst.

Es ist zweckmäßig, wenn das aus dem Granulat herzustellende Lebensmittel eine erhöhte Nährstoffdichte aufweist. Durch die erhöhte Nährstoffdichte kann auch mit kleineren Portionen der Nahrungsbedarf gedeckt werden.

Die erhöhte Nährstoffdichte kann mit Nahrungsmittelzusätzen kombiniert sein.

Vorteilhaft ist es, wenn die geschmacksgebenden Komponenten in unüblicher Kombination im Granulat enthalten sind. So hat es sich als appetitfördernd herausgestellt, wenn beispielsweise ein Erbsenbrei Schinkenspeck-oder Eintropfgeschmackskomponenten als Zusätze enthält.

Für Senioren hat es sich als appetitfördernd und als wohltuend erwiesen, wenn als geschmacksgebende Komponente ein derartiges Aroma oder eine derartige geschmacksgebende Komponente vorhanden ist, der den Senioren aus Kindertagen bekannt ist. Gerade die Psyche des älteren Menschen, die durch positive Erinnerungen angeregt wird, fördert das allgemeine Wohlbefinden des Senioren und somit auch seinen Appetit.

Das gefriergetrocknete Granulat lässt sich nicht nur wie bisher bekannt mit heißer Flüssigkeit, sondern auch mit warmer oder kalter Flüssigkeit zubereiten, wenn die gefriergetrocknete, zerkleinerte Masse eine maximale Korngröße von 5 mm aufweist, die Korngröße also kleiner als 5 mm ist. Hierdurch ist erreicht, dass das poröse Granulat im Vergleich zu seinem Volumen eine große Reaktionsfläche aufweist.

## Patentansprüche

1. Verfahren zur Herstellung von altersklassengerechten Lebensmitteln,
**dadurch gekennzeichnet,**
**dass** man als Basis ein oder mehrere zu Brei verarbeitungsfähige Grundnahrungsmittel verwendet, die einen erhöhten Trockenmasseanteil aufweisen,
**dass** man aus diesen Grundnahrungsmitteln einen Brei herstellt,
**dass** man dosiert Nahrungsmittelzusätze zusetzt,
**dass** man diese Zusätze homogen im Brei verteilt und
**dass** man anschließend den Brei mit den zugesetzten Zusatzstoffen gefriertrocknet und
**dass** man die gefriergetrocknete Masse einem Zerteilungsprozess zu einem Pulver oder einem Granulat unterzieht,
bevor man die feinzerteilte Trockenmasse abpackt und vor dem Verzehr mit Flüssigkeit wieder zu einem Brei anrührt.

2. Verfahren nach Anspruch 1,
**dadurch gekennzeichnet,**
**dass** man als zu Brei verarbeitungsfähiges Grundnahrungsmittel Gemüse, Obst oder Fleisch verwendet.

3. Verfahren nach Anspruch 1,
**dadurch gekennzeichnet,**
**dass** man das zu Brei verarbeitungsfähige Grundnahrungsmittel gefriert, bevor man es zu einem Brei zerkleinert.

4. Verfahren nach einem der vorangehenden Ansprüche,
**dadurch gekennzeichnet,**
**dass** man dem Brei dosiert Gewürze, Ballaststoffe, Minerale, Vitamine und/oder hochkalorische Stoffe zusetzt.

5. Verfahren nach einem der vorangehenden Ansprüche,
**dadurch gekennzeichnet,**
**dass** man vor dem Gerfriertrocknen dosiert appetit- und/oder geschmacksverstärkende Komponenten zusetzt.

6. Verfahren nach einem der vorangehenden Ansprüche,
**dadurch gekennzeichnet,**
**dass** man vor dem Gefrierfirocknen dosiert lebensmittelfärbende Zusätze zusetzt.

7. Verfahren nach einem der vorangehenden Ansprüche,
**dadurch gekennzeichnet,**
**dass** man die gefriergetrocknete Masse auf eine maximale Korngröße von 5 mm zerkleinert.

8. Verfahren nach einem der vorangehenden Ansprüche,
**dadurch gekennzeichnet,**
**dass** man vor dem Gefriertrocknen tierisches und/oder pflanzliches Eiweiß zusetzt.

9. Verfahren nach einem der vorangehenden Ansprüche,
**dadurch gekennzeichnet,**
**dass** man die Zerteilung in einem Kutter vornimmt.

10. Verfahren nach einem der vorangehenden Ansprüche,
**dadurch gekennzeichnet,**
**dass** man vor der Abfüllung des Granulates zwei oder mehrere Breie oder Granulate vermischt.

11. Verfahren nach einem der vorangehenden Ansprüche,
**dadurch gekennzeichnet,**
**dass** man der Mischung vor dem Mischvorgang als Zusätze Kakao, Schokolade, Marmelade, Trockenobst zusetzt.

12. Verfahren nach einem der vorangehenden Ansprüche,
**dadurch gekennzeichnet,**
**dass** man für ein seniorengerechtes Lebensmittel die geschmacksgebenden Komponenten als Zusätze überdosiert.

13. Verfahren nach Anspruch 12,
**dadurch gekennzeichnet,**
**dass** man einem Erbsenbrei Schinkenspeck- oder Eintropfgeschmackskomponenten zugibt.

14. Verfahren nach Anspruch 12 oder 13,
**dadurch gekennzeichnet,**
**dass** man als geschmacksgebende Komponente ein derartige Aroma oder eine derartige geschmacksgebende Komponente hinzugibt, der aus den Kindertagen des Senioren bekannt ist.

15. Verfahren nach einem der vorangehenden Ansprüche,
**dadurch gekennzeichnet,**
**dass** man der Mischung vor dem Mischvorgang wasserbindende Zusätze zusetzt.

16. Verfahren nach Anspruch 1,
**dadurch gekennzeichnet,**
**dass** man warme oder kalte Flüssigkeit zum Anrühren des Breies zugibt.

17. Verfahren nach einem der vorangehenden Ansprüche,
**dadurch gekennzeichnet,**
**dass** man als Flüssigkeiten Wasser, Milch, Sahne, Fruchtsaft oder Brühe zugibt.

18. Verfahren zur Herstellung von soniorengerechten Nahrungsmitteln,
**dadurch gekennzeichnet,**
**dass** man als Basis ein Gemüse verwendet, dem man als Zutaten Zucker oder einen Süßstoff und einen kalorienreichen Zusatz sowie einen Geschmacksverstärker zusetzt,
aus dem Ganzen einen Brei herstellt und diesen dann gefriertrocknet und die Trockenmasse dann einem Zerteilungsprozess zu einem Pulver oder einem Granulat unterzieht, die feinzerteilte Trockenmasse abpackt und vor dem Verzehr mit Wasser wieder zu einem Brei anrührt.

19. Gefriergetrocknetes altersstufengerechtes Lebensmittel,
**dadurch gekennzeichnet,**
**dass** das Lebensmittel aus einem oder mehreren zu Brei verarbeiteten Grundnahrungsmitteln besteht, wobei das Grundnahrungsmittel einen erhöhten Trockenmasseanteil aufweist,
**dass** diesem Brei dosiert Nahrungsmittelzusätze zugesetzt sind,
**dass** dieser Zusatz im Brei homogen verteilt ist,
so dass die gefriergetrocknete und zu Granulat zerkleinerte, ergänzte Nahrung durch Flüssigkeitszugabe zu einem Brei zur direkten Ausgabe ohne weitere Ergänzung bereitbar ist.

20. Gefriergetrocknetes Lebensmittel nach Anspruch 19,
**dadurch gekennzeichnet,**
**dass** das zu Brei verarbeitungsfähige Grundnahrungsmittel Gemüse, Obst oder Fleisch ist.

21. Gefriergetrocknetes Lebensmittel nach Anspruch 19,
**dadurch gekennzeichnet,**
**dass** der Brei dosiert zugesetzte Minerale und/oder Vitamine und/oder hochkalorische Stoffe enthält.

22. Gefriergetrocknetes Lebensmittel nach Anspruch 19-21,
**dadurch gekennzeichnet,**
**dass** der Brei dosiert Appetit- und/oder geschmacksverstärkende Komponenten als Zusätze enthält.

23. Gefriergetrocknetes Lebensmittel nach Anspruch 19-22,
**dadurch gekennzeichnet,**
**dass** der Brei dosiert lebensmittelfärbende Zusätze enthält.

24. Gefriergetrocknetes Lebensmittel nach Anspruch 19-23,
**dadurch gekennzeichnet,**
**dass** der Brei tierisches oder pflanzliches Eiweiß enthält.

25. Gefriergetrocknetes Lebensmittel nach Anspruch 19,
**dadurch gekennzeichnet,**
**dass** das Lebensmittel aus zwei oder mehreren unterschiedlichen gefriergetrockneten Breien besteht.

26. Gefriergetrocknetes Lebensmittel nach Anspruch 19,
**dadurch gekennzeichnet,**
**dass** für ein seniorengerechtes Lebensmittel die geschmacksgebenden Komponenten als Zusätze überdosiert zugesetzt sind.

27. Gefriergetrocknetes Lebensmittel nach Anspruch 19,
**dadurch gekennzeichnet,**
**dass** ein Erbsenbrei Schinkenspeck oder Eintropfgeschmackskomponenten als Zusätze enthält.

28. Gefriergetrocknetes Lebensmittel nach Anspruch 26, 27,
**dadurch gekennzeichnet,**
**dass** als geschmacksgebende Komponente ein derartiges Aroma oder eine derartige geschmacksgebende Komponente vorhanden ist, der den Senioren aus Kindertagen bekannt ist.

29. Gefriergetrocknetes Lebensmittel nach Anspruch 19,
**dadurch gekennzeichnet,**
**dass** der Mischung vor dem Mischvorgang als Zusätze Kakao, Schokolade, Marmelade, Trockenobst zugesetzt sind.

30. Gefriergetrocknetes Lebensmittel nach Anspruch 19,
**dadurch gekennzeichnet,**
**dass** die gefriergetrocknete, zerkleinerte Masse eine maximale Korngröße von 5 mm aufweist.
